# EUROPÄISCHE PATENTSCHRIFT

(11) **EP 4 206 517 B1**
(45) Veröffentlichungstag und Bekanntmachung des Hinweises auf die Patenterteilung: **09.10.2024**
(21) Anmeldenummer: 22207153.2
(22) Anmeldetag: 14.11.2022
(51) Int. Cl.: F17C 5/00

(54) **TANKSTELLE FÜR DRUCKFLUIDE**
FILLING STATION FOR PRESSURIZED FLUIDS
STATION DE REMPLISSAGE POUR FLUIDES SOUS PRESSION

(30) Priorität: 22.12.2021 AT 510402021
(43) Veröffentlichungstag der Anmeldung: 05.07.2023
(73) Patentinhaber: Wolftank Hydrogen GmbH, 39100 Bozen (IT)
(72) Erfinder: LECHTHALER, Markus, 39100 Bolzano (IT)
(74) Vertreter: Weiser & Voith Patentanwälte Partnerschaft

(56) Entgegenhaltungen:
- WO-A1-2021/083471
- US-A1- 2009 151 812
- US-A1- 2020 095 113
- US-B2- 7 168 464

## Beschreibung

Die vorliegende Erfindung betrifft eine Tankstelle für Druckfluide, insbesondere Wasserstoff oder Erdgas, umfassend einen Vorratsbehälter für das Druckfluid und eine von diesem gespeiste Zapfsäule, wobei der Vorratsbehälter in getrennte Sektionen partitioniert ist, die jeweils über ein erstes Schaltventil mit dem Eingang und über ein zweites Schaltventil mit dem Ausgang einer Hochdruckpumpe verbunden sind.

Tankstellen dieser Art, z.B. aus der WO 2021/083471 A1 bekannt, müssen im Betrieb unterschiedliche Anforderungen erfüllen. So erfordert das möglichst rasche Betanken von Fahrzeugen ein möglichst hohes Druckniveau des Druckfluids bei der Abgabe, beispielsweise über 275 bar für das Betanken von LKWs oder Bussen oder über 700 bar für das Betanken von PKWs. Derzeit werden dazu großvolumige Vorratsbehälter für das Druckfluid vor Ort benötigt, was insbesondere die Umrüstung bestehender Mineralöltankstellen auf Wasserstoff oder Erdgas erschwert. Die großvolumigen Vorratsbehälter müssen regelmäßig aus Tanklastwagen nachgefüllt werden, was nicht nur zeitaufwändig ist, sondern auch zu Betriebsunterbrechungen führen kann, sollte das Druckniveau im Vorratsbehälter nicht mehr für zügige Tankvorgänge ausreichen.

Die Erfindung setzt sich zum Ziel, die Nachteile des Standes der Technik zu überwinden und eine verbesserte Tankstelle für Druckfluide zu schaffen, welche möglichst unterbrechungsfrei ein stets ausreichendes Druckniveau für eine rasche Betankung unterschiedlicher Fahrzeugtypen zur Verfügung stellen.

Dieses Ziel wird mit einer Tankstelle der einleitend genannten Art erreicht, welche sich gemäß der Erfindung dadurch auszeichnet, dass die Zapfsäule einen Hochdruckpfad und einen Niederdruckpfad zur Abgabe des Druckfluids hat, wobei die ersten oder zweiten Schaltventile pumpenseitig über ein drittes Schaltventil mit dem Niederdruckpfad der Zapfsäule verbunden sind, und wobei der Ausgang der Hochdruckpumpe über ein viertes Schaltventil einen Hochdruckspeicher speist, welcher über ein fünftes Schaltventil mit dem Hochdruckpfad der Zapfsäule verbunden ist.

Die erfindungsgemäße Tankstelle stellt zwei verschiedene Druckniveaus an der Zapfsäule bereit, und zwar einen Niederdruckpfad zur Betankung von LKWs und Bussen und einen Hochdruckpfad zur Betankung von PKWs, wobei lediglich für den Hochdruckpfad ein gesonderter Hochdruckspeicher vorgesehen ist. Der Niederdruckpfad wird direkt aus dem Vorratsbehälter gespeist, welcher dazu in einzelne Drucksektionen partitioniert ist, die durch Umpumpen von einer Sektion in die andere aus der jeweils verwendeten Sektion ein höheres Druckniveau für die Betankung zur Verfügung stellen können als bei einem nichtpartitionierten Vorratsbehälter.

In einer bevorzugten Ausführungsform können dazu insbesondere alle Schaltventile von einer Steuereinrichtung gesteuert sein, welche an Drucksensoren der Sektionen und des Hochdruckspeichers angeschlossen und dafür ausgebildet ist, bei Abgabe von Druckfluid über den Niederdruckpfad die Sektionen einzeln aufeinanderfolgend wechselnd über das jeweilige zweite Schaltventil und das dritte Schaltventil an den Niederdruckpfad anzuschalten, und bei Abgabe von Druckfluid über den Hochdruckpfad den Zwischenspeicher über das fünfte Schaltventil an den Hochdruckpfad anzuschalten.

Besonders günstig ist es dabei, wenn die Steuereinrichtung dafür ausgebildet ist, bei Abfall des Drucks in der gerade für die Abgabe verwendeten Sektion unter einen vorgegebenen ersten Schwellwert den genannten Wechsel auf die nächstfolgende Sektion durchzuführen.

Weiters bevorzugt ist die Steuereinrichtung dafür ausgebildet, Druckfluid aus zumindest einer Sektion, deren Druck unter dem ersten Schwellwert liegt, über das jeweilige erste Schaltventil, die Hochdruckpumpe und das jeweilige zweite Schaltventil in die für die Abgabe verwendete oder bestimmte Sektion umzupumpen.

Gemäß einem weiteren bevorzugten Merkmal ist die Steuereinrichtung insbesondere dafür ausgebildet, bei Abfall des Drucks im Hochdruckspeicher unter einen vorgegebenen zweiten Schwellwert den Hochdruckspeicher aus zumindest einer der Sektionen über das jeweilige erste Schaltventil, die Hochdruckpumpe und das vierte Schaltventil nachzufüllen.

Die erfindungsgemäße Tankstelle ermöglicht die Abgabe von Druckfluid wahlweise auf zwei verschiedenen Druckniveaus, und dies mit geringstmöglichem Platzbedarf für lediglich einen Hochdruckspeicher für das höhere Druckniveau. Der direkt für das niedrigere Druckniveau verwendete Vorratsbehälter kann so insbesondere in Form eines transportablen Containers ausgeführt werden. Damit erübrigt sich eine Befüllung des Vorratsbehälters über regelmäßige Tanklastwagenlieferungen. Der Vorratsbehälter selbst kann - als Wechselcontainer - einfach gegen einen gefüllten "frischen" Container ausgetauscht werden. Dies erleichtert auch die Umrüstung bestehender Mineralöltankstellen auf einen Druckfluidbetrieb, denn es braucht kein eigener großvolumiger Vorratsbehälter vor Ort aufgebaut werden, die Anlieferung eines jeweils neuen Containers mit einem frischen Vorrat genügt.

Wenn der Vorratsbehälter in Form eines transportablen Containers ausgeführt ist, können bevorzugt auch die ersten und zweiten Schaltventile sowie eine bzw. die genannte Steuereinrichtung in den Container integriert werden, um den Aufbau der Tankstelle vor Ort bzw. die Umrüstung bestehender Mineralöltankstellen zu erleichtern.

Besonders vorteilhaft ist es, wenn jede Sektion aus einer Gruppe parallelgeschalteter Druckflaschen besteht. Der Vorratsbehälter kann so aus einer Vielzahl herkömmlicher, standardisierter Druckgasflaschen aufgebaut werden, die jeweils gruppenweise zu den Sektionen zusammengeschaltet werden. Wenn der Vorratsbehälter in Form eines transportablen Containers ausgebildet ist, besteht das Wiederbefüllen der Tankstelle somit in einem containerweisen Austausch von standardisierten Druckgasflaschen.

In einer weiteren bevorzugten Ausführungsform der Erfindung sind alle ersten Schaltventile mit dem Eingang der Hochdruckpumpe unter Zwischenschaltung eines gemeinsamen sechsten Schaltventils verbunden. Dies dient dem Schutz der Hochdruckpumpe, wenn der Niederdruckpfad über die ersten Schaltventile beschickt wird. Alternativ oder zusätzlich können alle zweiten Schaltventile mit dem Ausgang der Hochdruckpumpe unter Zwischenschaltung eines siebten Schaltventils verbunden sein. Dies ist für den Schutz der Hochdruckpumpe nützlich, wenn der Niederdruckpfad über die zweiten Schaltventile beschickt wird.

In jedem Fall ist es besonders günstig, wenn die Zapfsäule einen Kühler sowohl für den Hochdruckpfad als auch den Niederdruckpfad hat. Dadurch kann das Betanken auf der für das jeweilige Druckniveau erforderlichen Niedertemperatur von z.B. -40 °C erfolgen.

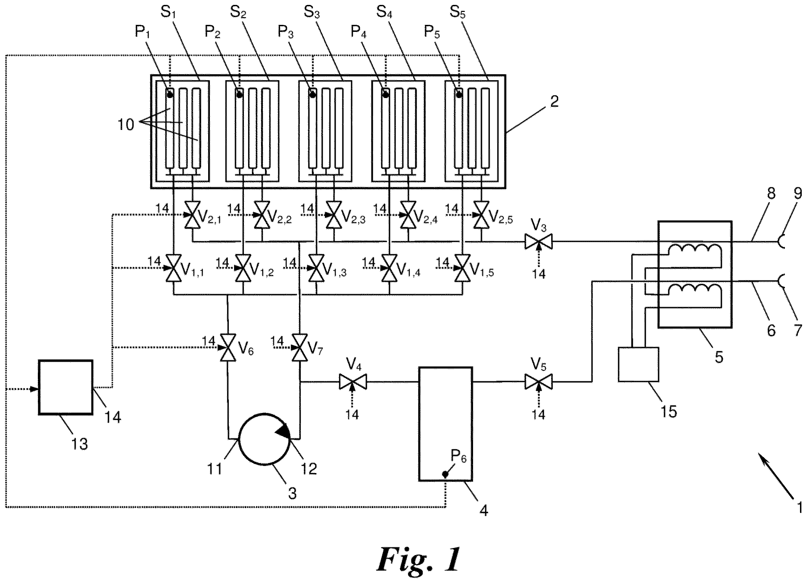

Die Erfindung wird nachstehend anhand eines in der beigeschlossenen Zeichnung dargestellten Ausführungsbeispiels näher erläutert. In der Zeichnung zeigt die einzige Fig. 1 eine Tankstelle gemäß der Erfindung in einem Blockschaltbild.

Fig. 1 zeigt eine Tankstelle 1 für Druckfluide wie Wasserstoff, Flüssigerdgas (Liquefied Natural Gas, LNG) od.dgl. Die Hauptkomponenten der Tankstelle 1 sind ein Vorratsbehälter 2 für das Druckfluid und eine vom Vorratsbehälter 2 einerseits direkt und anderseits über eine Hochdruckpumpe (Kompressor) 3 und einen Hochdruckspeicher 4 gespeiste Zapfsäule 5.

Die Zapfsäule 5 besitzt einen Hochdruckpfad 6 mit einem Zapfanschluss 7 für Druckfluid unter hohem Druck, insbesondere zur Betankung von PKWs, und einen Niederdruckpfad 8 mit einem Zapfanschluss 9 für Druckfluid unter niederem Druck, insbesondere zur Betankung von LKWs und Bussen.

Die Begriffe "Hochdruck" und "Niederdruck" sind hier relativ zueinander zu verstehen, in dem Sinne, dass das Druckniveau im Hochdruckpfad 6 bei der Betankung eines am Zapfanschluss 7 angeschlossenen Fahrzeugs im Normalbetrieb höher ist als das Druckniveau im Niederdruckpfad 8 bei der Betankung eines am Zapfanschluss 9 angeschlossenen Fahrzeugs. Beispielsweise kann der Druck im Tank eines PKWs bis zu 700 bar betragen (bei einem nur halbgefüllten oder leeren Tank entsprechend weniger), und zum Betanken eines ganz oder fast gefüllten PKWs ist ein entsprechend höherer Druck im Hochdruckpfad 6 erforderlich, um Druckfluid in den Fahrzeugtank fließen lassen zu können, beispielsweise ein um mindestens 100 bar höherer Druck im Hochdruckpfad 6. Das Druckniveau des Hochdruckpfades 6 beträgt daher beispielsweise 600 bis 1000 bar, bevorzugt 700 bis 900 bar, insbesondere bevorzugt etwa 900 bar.

Für die Betankung von PKWs und Bussen genügt in der Regel ein niedrigeres Druckniveau, da der Druck in einem ganz oder fast gefüllten LKW- oder Bus-Fahrzeugtank im Bereich von etwa 350 bar liegt. Das Druckniveau im Niederdruckpfad 8 liegt daher bevorzugt im Bereich von 250 bis 525 bar, bevorzugt 275 bis 500 bar, besonders bevorzugt bei etwa 500 bar.

Der Vorratsbehälter 2 ist in mehrere voneinander getrennte (hier: fünf) Sektionen S₁, S₂, ..., allgemein Sᵢ, unterteilt. In einer praktischen Ausführungsform wird jede Sektion Si durch eine Gruppe einander parallelgeschalteter Druckflaschen ("Gasflaschen") gebildet.

Der gesamte Vorratsbehälter 2 kann stationär oder insbesondere transportabel ausgeführt sein, beispielsweise in Form eines standardisierten Containers, z.B. eines 30-Fuß-Containers, in dem die Druckflaschen 10 - gruppenweise zusammengeschaltet zu den Sektionen Si - angeordnet sind. Ein solcher containerisierter Vorratsbehälter 2 kann beispielsweise von einem Sattelschlepper direkt am Ort der Tankstelle 1 abgesetzt werden und nach Entleerung gegen einen frisch mit Druckfluid gefüllten Vorratsbehälter 2 ausgetauscht werden.

Jede Sektion Si des Vorratsbehälters 2 ist jeweils über ein erstes Schaltventil V_{1,i} mit dem Eingang 11 der Hochdruckpumpe 3 und über ein zweites Schaltventil V_{2,i} mit dem Ausgang 12 der Hochdruckpumpe 3 verbunden. Im vorliegenden Beispiel mit fünf Sektionen S₁ - S₅ gibt es somit einen Satz V_{1,1} - V_{1,5} an ersten Schaltventilen V_{1,i} und einen Satz V_{2,1} - V_{2,5} an zweiten Schaltventilen V_{2,i}.

Die zweiten Schaltventile V_{2,i} sind pumpenseitig, d.h. an ihren dem Vorratsbehälter 2 ab- und der Hochdruckpumpe 3 zugewandten Seiten, über ein drittes Schaltventil V₃ mit dem Niederdruckpfad 8 der Zapfsäule 5 verbunden. Alternativ (nicht dargestellt) könnten stattdessen die ersten Schaltventile V_{1,i} pumpenseitig über das dritte Schaltventil V₃ mit dem Niederdruckpfad 5 verbunden sein.

Der Hochdruckpfad 6 wird über die Hochdruckpumpe 3 und den Hochdruckspeicher 4 beschickt, und zwar indem der Ausgang 12 der Hochdruckpumpe 3 über ein viertes Schaltventil V₄ den Hochdruckspeicher 4 speist und dieser über ein fünftes Schaltventil V₅ mit dem Hochdruckpfad 6 der Zapfsäule 5 verbunden ist.

Optional können alle ersten Schaltventile V_{1,i} mit dem Eingang 11 der Hochdruckpumpe 3 unter Zwischenschaltung eines sechsten Schaltventils V₆ verbunden sein. Ebenso optional können alle zweiten Schaltventile V_{2,1} mit dem Ausgang 12 der Hochdruckpumpe 3 unter Zwischenschaltung eines siebten Schaltventils V₇ verbunden sein.

Alle Schaltventile V_{1,i}, V_{2,i}, V₃, V₄, V₅, V₆ und V₇ werden von einer zentralen Steuereinrichtung 13 gesteuert, wobei die Steuerpfade 14 von der Steuereinrichtung 13 zu den einzelnen Schaltventilen zwecks Übersichtlichkeit der Darstellung nur ausschnittsweise gezeigt sind.

Wenn der Vorratsbehälter 2 in Form eines transportablen Containers ausgeführt ist, können optional die Schaltventile V_{1,i}, V_{2,i}, gegebenenfalls auch die Schaltventile V₃, V₄, V₆ und V₇ und die Steuereinrichtung 13, in den Container eingebaut sein, um den Aufbau der Tankstelle 1 vor Ort zu erleichtern. Es braucht dann nur der containerisierte und mit diesen Einbauten ausgestattete Vorratsbehälter 2 vor Ort aufgestellt und an die Hochdruckpumpe 3 mit dem Hochdruckspeicher 4 und dem Schaltventil V₅ und an die Zapfsäule 5 angeschlossen zu werden.

Die Steuereinrichtung 13 empfängt Druckmesswerte von Drucksensoren P₁, P₂, ..., allgemein Pᵢ, die jeweils einer der Sektionen S₁, S₂, ..., Si sowie dem Hockdruckspeicher 4 zugeordnet sind und deren Innendruck messen. Weitere Drucksensoren (nicht gezeigt) können das Druckniveau im Hochdruckpfad 6, im Niederdruckpfad 8, an den Ein- und Ausgängen 11, 12 der Hochdruckpumpe 3 und/oder auf allen weiteren Druckfluidleitungen der Tankstelle 1 messen.

Die Steuereinrichtung 13 ist so ausgebildet, dass sie in Abhängigkeit von den Druckmesswerten der Drucksensoren Pi die Schaltventile V_{1,i}, V_{2,i}, V₃, V₄, V₅ und (falls vorhanden) V₆, V₇ so steuert, dass unter aufeinanderfolgend wechselnder Verwendung der Sektionen Si möglichst lange ein ausreichendes Druckniveau im Niederdruckpfad 8 und unter Verwendung des Hochdruckspeichers 4 im Hochdruckpfad 6 gehalten wird, wobei die Hochdruckpumpe 3 für beide Pfade wie folgt verwendet wird.

Bei Abgabe von Druckfluid über den Niederdruckpfad 8 schaltet die Steuereinrichtung 13 die Sektionen Si einzeln aufeinanderfolgend wechselnd über das jeweilige zweite Schaltventil V_{2,i} (oder alternativ: das jeweilige erste Schaltventil V_{1,i}) und das gemeinsame dritte Schaltventil V₃ an den Niederdruckpfad 8 an. Dabei führt die Steuereinrichtung 13 durch entsprechende Schaltung der Schaltventile V_{2,i} (bzw. V_{1,i}) jeweils dann einen Wechsel von einer Sektion Si auf die nächste Sektion Sᵢ₊₁ auch, wenn der Druck in der gerade für die Abgabe verwendeten Sektion Si unter einen vorgegebenen ersten Schwellwert fällt. Der erste Schwellwert kann beispielsweise im Bereich von 300 bis 400 bar liegen, bevorzugt bei etwa 350 bar.

Zusätzlich kann die Steuereinrichtung 13 während der Abgabe und/oder in Betriebspausen, wenn gerade keine Abgabe erfolgt, Druckfluid aus einer oder mehreren anderen Sektionen S_{i±j} (j > O), die gerade nicht zur Abgabe verwendet wird/werden, weil ihr Druck unter dem ersten Schwellwert liegt, über deren jeweiliges erstes Schaltventil V_{1,i±j}, die Hochdruckpumpe 3 und das jeweilige zweite Schaltventil V_{2,i} (gegebenenfalls unter Öffnung der zusätzlichen Schaltventile V₆ und V₇, falls vorhanden) in die gerade für die Abgabe von Druckfluid verwendete oder für die nächste Abgabe bestimmte Sektion Si umpumpen. Damit wird in der jeweils verwendeten Sektion Si für die Abgabe über den Niederdruckpfad 8 möglichst lange ein möglichst hohes Druckniveau aufrechterhalten.
Für die Abgabe von Druckfluid über den Hochdruckpfad 6 wird ebenso die Hochdruckpumpe 3 verwendet. Die Steuereinrichtung 13 steuert dazu die Schaltventile V₄ und V₅ so, dass sie bei einem Abfall des Drucks im Hochdruckspeicher 4 unter einen vorgegebenen zweiten Schwellwert den Hochdruckspeicher 4 aus einer oder mehreren Sektionen Si über deren jeweiliges erstes Schaltventil V_{1,i}, die Hochdruckpumpe 3 und das vierte Schaltventil V₄ nachfüllt. Zur Abgabe von Druckfluid über den Hochdruckpfad 6 und den Zapfauslass 8 wird dann das fünfte Schaltventil V₅ geöffnet, um Druckfluid aus dem Hochdruckspeicher 4 dem Hochdruckpfad 6 zuzuführen.

Für das Nachfüllen des Hochdruckspeicher 4 über die Hochdruckpumpe 3 kann insbesondere jene Sektion Si verwendet werden, welche den höchsten Druck hat, um die Druckdifferenz zwischen Eingang 11 und Ausgang 12 der Hochdruckpumpe 3 möglichst gering zu halten und so deren Betrieb zu erleichtern.

Betankungsvorgänge am Zapfauslass 9 des Niederdruckpfads 8 können jeweils aus der Sektion Si mit dem gerade höchsten Druckniveau gespeist werden. Alternativ können eine oder mehrere der Sektionen Si verwendet werden, deren Druckniveau für einen sicheren und raschen Betankungsvorgang eines Fahrzeugs am Zapfanschluss 9 noch ausreicht, beispielsweise wenn der Fahrzeugtank fast leer ist (Druck z.B. maximal 175 bar) und noch mindestens eine Druckdifferenz von z.B. 100 bar zur jeweiligen Sektion Si vorliegt, z.B. diese auf mindestens 275 bar liegt. Wenn der Druck im Fahrzeugtank beim fortgesetzten Betanken ansteigt, kann dann auf eine andere Sektion Si mit höherem Druck gewechselt werden, um stets eine ausreichende Druckdifferenz zwischen der gerade verwendeten Sektion Si und dem Fahrzeugtank für das Fließenlassen des Druckfluids in den Fahrzeugtank zu gewährleisten.

In allen beschriebenen Ausführungsformen kann die Zapfsäule 5 mit einem Kühler 15 für den Hochdruckpfad 6 und den Niederdruckpfad 8 ausgestattet werden, um das an den Zapfauslässen 7, 9 abgegebene Druckfluid auf einer niederen Temperatur von z.B. -40 °C zu halten.

Die Tankstelle 1 der vorliegenden Offenbarung benötigt nur eine einzige, verhältnismäßig kleine Hochdruckpumpe 3 in Verbindung mit einen verhältnismäßig kleinen Hochdruckspeicher 4 und einem partitionierten Vorratsbehälter 2, um Fahrzeuge auf zwei verschiedenen Druckniveaus rasch betanken zu können. Dadurch werden Investitions-, Wartungs- und Stromkosten sowie die Kosten für Sicherheitstechnik, wie Brand- und Explosionsschutz, gesenkt.

Die Erfindung ist nicht auf die dargestellten und beschriebenen Ausführungsformen beschränkt, sondern umfasst alle Varianten, Modifikationen und deren Kombinationen, die in den Rahmen der angeschlossenen Ansprüche fallen.

## Patentansprüche

1. Tankstelle für Druckfluide, insbesondere Wasserstoff oder Erdgas, umfassend einen Vorratsbehälter (2) für das Druckfluid und eine von diesem gespeiste Zapfsäule (5),
wobei der Vorratsbehälter (2) in getrennte Sektionen (Sᵢ) partitioniert ist, die jeweils über ein erstes Schaltventil (V_{1,i}) mit dem Eingang (11) und über ein zweites Schaltventil (V_{2,i}) mit dem Ausgang (12) einer Hochdruckpumpe (3) verbunden sind,
**dadurch gekennzeichnet,**
**dass** die Zapfsäule (5) einen Hochdruckpfad (6) und einen Niederdruckpfad (8) zur Abgabe des Druckfluids hat,
wobei die ersten oder zweiten Schaltventile (V_{1,i}, V_{2,i}) pumpenseitig über ein drittes Schaltventil (V₃) mit dem Niederdruckpfad (8) der Zapfsäule (5) verbunden sind, und
wobei der Ausgang (12) der Hochdruckpumpe (3) über ein viertes Schaltventil (V₄) einen Hochdruckspeicher (4) speist, welcher über ein fünftes Schaltventil (V₅) mit dem Hochdruckpfad (6) der Zapfsäule verbunden ist.

2. Tankstelle nach Anspruch 1, **dadurch gekennzeichnet, dass** alle Schaltventile (V_{1,i}, V_{2,i}, V₃ - V₇) von einer Steuereinrichtung (13) gesteuert sind, welche an Drucksensoren (Pᵢ) der Sektionen (Sᵢ) und des Hochdruckspeichers (4) angeschlossen und dafür ausgebildet ist,
bei Abgabe von Druckfluid über den Niederdruckpfad (8) die Sektionen (Sᵢ) einzeln aufeinanderfolgend wechselnd über das jeweilige zweite Schaltventil (V_{2,i}) und das dritte Schaltventil (V₃) an den Niederdruckpfad (8) anzuschalten, und
bei Abgabe von Druckfluid über den Hochdruckpfad (6) den Hochdruckspeicher (4) über das fünfte Schaltventil (V₅) an den Hochdruckpfad (6) anzuschalten.

3. Tankstelle nach Anspruch 2, **dadurch gekennzeichnet, dass** die Steuereinrichtung (13) dafür ausgebildet ist, bei Abfall des Drucks in der gerade für die Abgabe verwendeten Sektion (Sᵢ) unter einen vorgegebenen ersten Schwellwert den genannten Wechsel auf die nächstfolgende Sektion (Sᵢ₊₁) durchzuführen.

4. Tankstelle nach Anspruch 2 oder 3, **dadurch gekennzeichnet, dass** die Steuereinrichtung (13) dafür ausgebildet ist, Druckfluid aus zumindest einer Sektion (S_{i±j}), deren Druck unter dem ersten Schwellwert liegt, über das jeweilige erste Schaltventil (V_{1,i±j}), die Hochdruckpumpe (3) und das jeweilige zweite Schaltventil (V_{2,i}) in die für die Abgabe verwendete oder bestimmte Sektion (Sᵢ) umzupumpen.

5. Tankstelle nach einem der Ansprüche 2 bis 4, **dadurch gekennzeichnet, dass** die Steuereinrichtung (13) dafür ausgebildet ist, bei Abfall des Drucks im Hochdruckspeicher (4) unter einen vorgegebenen zweiten Schwellwert den Hochdruckspeicher (4) aus zumindest einer der Sektionen (Sᵢ) über das jeweilige erste Schaltventil (V_{1,i}), die Hochdruckpumpe (3) und das vierte Schaltventil (V₄) nachzufüllen.

6. Tankstelle nach einem der Ansprüche 1 bis 5, **dadurch gekennzeichnet, dass** der Vorratsbehälter (2), bevorzugt zusammen mit den ersten und zweiten Schaltventilen (V_{1,i}, V_{2,i}) und/oder einer bzw. der genannten Steuereinrichtung (13), in Form eines transportablen Containers ausgebildet ist.

7. Tankstelle nach einem der Ansprüche 1 bis 6, **dadurch gekennzeichnet, dass** jede Sektion (Sᵢ) aus einer Gruppe parallelgeschalteter Druckflaschen (10) besteht.

8. Tankstelle nach einem der Ansprüche 1 bis 7, **dadurch gekennzeichnet, dass** alle ersten Schaltventile (V_{1,i}) mit dem Eingang (11) der Hochdruckpumpe (3) unter Zwischenschaltung eines gemeinsamen sechsten Schaltventils (V₆) verbunden sind.

9. Tankstelle nach einem der Ansprüche 1 bis 8, **dadurch gekennzeichnet, dass** alle zweiten Schaltventile (V_{2,i}) mit dem Ausgang (12) der Hochdruckpumpe (3) unter Zwischenschaltung eines siebten Schaltventils (V₇) verbunden sind.

10. Tankstelle nach einem der Ansprüche 1 bis 9, **dadurch gekennzeichnet, dass** die Zapfsäule (5) einen Kühler (15) sowohl für den Hochdruckpfad (6) als auch den Niederdruckpfad (8) hat.

## Claims

1. A filling station for pressurized fluids, particularly hydrogen or natural gas, comprising a storage tank (2) for the pressurized fluid and a filling pump (5) fed by the same,
wherein the storage tank (2) is partitioned into separate sections (Sᵢ), which are each connected to the inlet (11) via a first switching valve (V_{1,i}) and to the outlet (12) of a high-pressure pump (3) via a second switching valve (V_{2,i}),
**characterized in that**
the filling pump (5) has a high-pressure path (6) and a low-pressure path (8) for delivering the pressurized fluid,
wherein the first or second switching valves (V_{1,i}, V_{2,i}) are connected on the pump side via a third switching valve (V₃) to the low-pressure path (8) of the filling pump (5), and
wherein the outlet (12) of the high-pressure pump (3) supplies a high-pressure tank (4) via a fourth switching valve (V₄), which high-pressure tank is connected to the high-pressure path (6) of the filling pump via a fifth switching valve (V₅) .

2. The filling station according to claim 1, **characterized in that** all switching valves (V_{1,i}, V_{2,i}, V₃ to V₇) are controlled by a control unit (13) which is connected to pressure sensors (Pᵢ) of the sections (Sᵢ) and the high-pressure tank (4) and is configured to,
when delivering pressurized fluid via the low-pressure path (8), switch the sections (Sᵢ) individually, alternating one after another via the respective second switching valve (V_{2,i}) and the third switching valve (V₃) to the low-pressure path (8), and
when delivering pressurized fluid via the high-pressure path (6), switch the high-pressure tank (4) via the fifth switching valve (V₅) to the high-pressure path (6).

3. The filling station according to claim 2, **characterized in that** the control unit (13) is configured to, when the pressure in the section (Sᵢ) currently used for filling drops below a predefined first threshold value, perform said alternating to the next section (Sᵢ₊₁).

4. The filling station according to claim 2 or 3, **characterized in that** the control unit (13) is configured to pump pressurized fluid from of at least one section (S_{i±j}) the pressure of which is below the first threshold value, via the respective first switching valve (V_{1,i±j}), the high-pressure pump (3), and the respective second switching valve (V_{2,i}) into the section (Sᵢ) used or intended for filling.

5. The filling station according to any one of claims 2 to 4, **characterized in that** the control unit (13) is configured to, when the pressure in the high-pressure tank (4) drops below a predefined second threshold value, refill the high-pressure tank (4) from at least one of the sections (Sᵢ) via the respective first switching valve (V_{1,i}), the high-pressure pump (3), and the fourth switching valve (V₄).

6. The filling station according to any one of claims 1 to 5, **characterized in that** the storage tank (2), preferably together with the first and second switching valves (V_{1,i}, V_{2,i}) and/or a or said control unit (13), is designed as a transportable container.

7. The filling station according to any one of claims 1 to 6, **characterized in that** each section (Sᵢ) consists of a group of pressure bottles (10) connected in parallel.

8. The filling station according to any one of claims 1 to 7, **characterized in that** all the first switching valves (V_{1,i}) are connected to the inlet (11) of the high-pressure pump (3) via an intermediate connection of a common sixth switching valve (V₆).

9. The filling station according to any one of claims 1 to 8, **characterized in that** all the second switching valves (V_{2,i}) are connected to the outlet (12) of the high-pressure pump (3) via an intermediate connection of a seventh switching valve (V₇).

10. The filling station according to any one of claims 1 to 9, **characterized in that** the filling pump (5) has a cooler (15) for both the high-pressure path (6) and the low-pressure path (8).

## Revendications

1. Station de remplissage pour fluides sous pression, notamment l'hydrogène ou le gaz naturel, comprenant un réservoir de stockage (2) pour le fluide sous pression et une pompe à carburant (5) alimentée par celui-ci,
dans laquelle le réservoir de stockage (2) est partitionné en sections (Sᵢ) séparées qui sont respectivement reliées avec l'entrée (11) par le biais d'une première vanne de commutation (V_{1,i}) et avec la sortie (12) d'une pompe haute pression (3) par le biais d'une deuxième vanne de commutation (V_{2,i}),
**caractérisée en ce**
**que** la pompe à carburant (5) a un trajet haute pression (6) et un trajet basse pression (8) pour la délivrance du fluide sous pression,
dans laquelle les première ou deuxième vannes de commutation (V_{1,i}, V_{2,i}) sont reliées du côté pompe par le biais d'une troisième vanne de commutation (V₃) avec le trajet basse pression (8) de la pompe à carburant (5), et
dans laquelle la sortie (12) de la pompe haute pression (3) alimente un réservoir haute pression (4) par le biais d'une quatrième vanne de commutation (V₄), lequel réservoir haute pression est relié avec le trajet haute pression (6) de la pompe à carburant par le biais d'une cinquième vanne de commutation (V₅).

2. Station de remplissage selon la revendication 1, **caractérisée en ce que** toutes les vannes de commutation (V_{1,i}, V_{2,i}, V₃ à V₇) sont commandées par un dispositif de commande (13) lequel est connecté à des capteurs de pression (Pᵢ) des sections (Sᵢ) et du réservoir haute pression (4) et est conçu pour,
lors de la délivrance de fluide sous pression par le trajet basse pression (8), mettre en marche les sections (Sᵢ) individuellement alternant les unes à la suite des autres par le biais de la deuxième vanne de commutation (V_{2,i}) respective et de la troisième vanne de commutation (V₃) sur le trajet basse pression (8), et
lors de la délivrance de fluide sous pression par le biais du trajet haute pression (6), mettre en marche le réservoir haute pression (4) sur trajet haute pression (6) par le biais de la cinquième vanne de commutation (V₅).

3. Station de remplissage selon la revendication 2, **caractérisée en ce que** le dispositif de commande (13) est conçu pour, lors d'une chute de la pression dans la section (Sᵢ) actuellement employée pour la délivrance en-dessous d'une première valeur de seuil prédéfinie, exécuter ladite alternance vers la section suivante (Sᵢ₊₁).

4. Station de remplissage selon la revendication 2 ou 3, **caractérisée en ce que** le dispositif de commande (13) est conçu pour pomper du fluide sous pression hors d'au moins une section (S_{i±j}) dont la pression se situe en-dessous de la première valeur de seuil, par le biais de la première vanne de commutation (V_{1,i±j}) respective, la pompe haute pression (3) et la deuxième vanne de commutation (V_{2,i}) respective dans la section (Sᵢ) employée ou prévue pour la délivrance.

5. Station de remplissage selon l'une des revendications 2 à 4, **caractérisée en ce que** le dispositif de commande (13) est conçu pour, lors de la chute de la pression dans le réservoir haute pression (4) en-dessous d'une deuxième valeur de seuil prédéfinie, remplir à nouveau le réservoir haute pression (4) à partir d'au moins une des sections (Sᵢ) par le biais de la première vanne de commutation (V_{1,i}) respective, la pompe haute pression (3) et la quatrième vanne de commutation (V₄).

6. Station de remplissage selon l'une des revendications 1 à 5, **caractérisée en ce que** le réservoir de stockage (2), de préférence avec les première et deuxième vannes de commutation (V_{1,i}, V_{2,i}) et/ou un ou ledit dispositif de commande (13) est conçu sous la forme d'un conteneur transportable.

7. Station de remplissage selon l'une des revendications 1 à 6, **caractérisée en ce que** chaque section (Sᵢ) est constituée d'un groupe de bouteilles sous pression (10) couplées en parallèle.

8. Station de remplissage selon l'une des revendications 1 à 7, **caractérisée en ce que** toutes les premières vannes de commutation (V_{1,i}) sont reliées avec l'entrée (11) de la pompe haute pression (3) moyennant un raccordement intermédiaire d'une sixième vanne de commutation (V₆) commune.

9. Station de remplissage selon l'une des revendications 1 à 8, **caractérisée en ce que** toutes les deuxièmes vannes de commutation (V_{2,i}) sont reliées avec la sortie (12) de la pompe haute pression (3) moyennant un raccordement intermédiaire d'une septième vanne de commutation (V₇).

10. Station de remplissage selon l'une des revendications 1 à 9, **caractérisée en ce que** la pompe à carburant (5) a un refroidisseur (15) à la fois pour le trajet haute pression (6) et le trajet basse pression (8).
